(19) Europäisches Patentamt
European Patent Office
Office européen des brevets

(11) Veröffentlichungsnummer: **0 155 435**
**B1**

(12) # EUROPÄISCHE PATENTSCHRIFT

(45) Veröffentlichungstag der Patentschrift: **23.08.89**

(51) Int. Cl.⁴: **C 08 G 73/12**, C 08 L 79/08, C 08 F 36/20

(21) Anmeldenummer: **84810654.8**

(22) Anmeldetag: **21.12.84**

(54) **Verfahren zur Herstellung von vernetzten Polymeren durch kationische Polymerisation von ungesättigten bicyclischen Imiden.**

(30) Priorität: **31.01.84 CH 449/84**

(43) Veröffentlichungstag der Anmeldung: **25.09.85 Patentblatt 85/39**

(45) Bekanntmachung des Hinweises auf die Patenterteilung: **23.08.89 Patentblatt 89/34**

(84) Benannte Vertragsstaaten: **CH DE FR GB IT LI NL**

(56) Entgegenhaltungen:
**EP-A-0 105 024**
**EP-A-0 152 372**
**US-A-3 105 839**
**US-A-3 781 247**

(73) Patentinhaber: **CIBA- GEIGY AG, Klybeckstrasse 141, CH- 4002 Basel (CH)**

(72) Erfinder: **Renner, Alfred, Dr., Marcoup 2, CH- 3280 Muntelier (CH)**

**EP 0 155 435 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Herstellung von vernetzten Polymeren durch kationische Polymerisation von Allyl- oder Methallyl- und gegebenenfalls Methyl-substitutierten Bicyclo[2.2.1]-hept-5-en-2,3-dicarbonsäureimiden sowie lagerstabile heisshärtbare (vernetzbare) Stoffgemische enthaltend das bicyclische Imid und einen für die kationische Polymerisation geeigneten Katalysator.

Imidgruppen aufweisende vernetzte Polymere sind als wertvolle Kunststoffe, die sich insbesondere durch ihre hohe Hitzebeständigkeit, auszeichnen, bekannt.

In der DE-OS-2 627 045 ist ein Verfahren beschrieben, worin Maleinimide mit Alkenylphenolen und Alkenylphenolethern, gegebenenfalls in Anwesenheit eines radikalischen oder eines basischen ionischen Katalysators, zu vernetzten Polymeren umgesetzt werden.

Aus der DE-OS-2 657 049 ist bekannt, dass mehrere Doppelbindungen enthaltende Imide, u.a. Nadicimide, auch ohne zusätzliche Reaktionspartner durch Erhitzen zu vernetzten Polymeren umgesetzt werden können. Dazu werden allerdings im allgemeinen sehr hohe Temperaturen und lange Reaktionszeiten benötigt. Das zu den erfindungsgemässen vernetzten Polymeren führende Verfahren ermöglicht nun die Vernetzung bei tieferen Temperaturen (im allgemeinen unterhalb 200°C) in einer wesentlich kürzeren Zeit (weniger als 6 Stunden).

Gegenstand der Erfindung ist ein Verfahren zur Herstellung von vernetzten Polymeren, dadurch gekennzeichnet, dass man Imide der Formel I

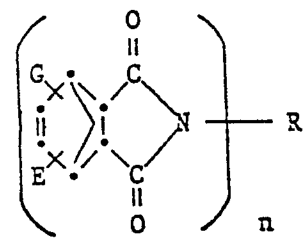 (I),

worin E Allyl oder Methallyl, G Wasserstoff oder Methyl und n 1 oder 2 bedeuten und R, falls n 1 bedeutet, für Wasserstoff, Alkyl mit 1 - 12 C-Atomen, Alkenyl mit 3 - 6 C-Atomen, Cycloalkyl mit 5 - 8 C-Atomen, Aryl mit 6 - 10 C-Atomen oder Benzyl oder, falls n 2 bedeutet, für $-C_mH_{2m}-$ mit m = 2 - 20, Arylen mit 6 - 10 C-Atomen oder für eine Gruppe der Formel II

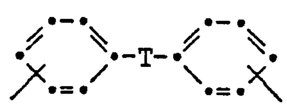 (II),

worin T Methylen, Isopropyliden, CO, O, S oder $SO_2$ bedeutet, steht, in Gegenwart mindestens eines für die kationische Polymerisation geeigneten Katalysators erhitzt.

Die Umsetzung erfolgt vorzugsweise bei einer Temperatur von 160 - 260°C, besonders bevorzugt bei 180 - 250°C, insbesondere bei 180 - 200°C, während etwa 1 - 6 Stunden, besonders bevorzugt während etwa 3 - 5 Stunden.

R kann eine gerad- oder verzweigtkettige Alkylgruppe mit 1 - 12 C-Atomen bedeuten, wie Methyl, Ethyl, Isopropyl, n-Butyl, Isopentyl, n-Hexyl, 2-Ethyl-hexyl, n-Decyl und n-Dodecyl, vorzugsweise Alkyl mit 1 - 8 C-Atomen.

R kann auch eine geradkettige oder verzweigtkettige Alkenylgruppe mit 3 - 6 C-Atomen bedeuten, wie Allyl, Methallyl, 2-Butenyl und 3-Hexenyl, vorzugsweise Allyl.

Wenn R eine Cycloalkylgruppe bedeutet kann es sich um eine Cyclopentyl-, Cyclohexyl-, Cycloheptyl- oder Cyclooctylgruppe handeln, vorzugsweise um Cyclohexyl.

R in der Bedeutung einer Arylgruppe kann unsubstituiertes Phenyl oder eine durch eine oder zwei Methylgruppen substituierte Phenylgruppe sein, wie Tolyl oder Xylyl, oder auch Naphthyl. Bevorzugt ist die Phenylgruppe. Stellt R eine Gruppe $-C_mH_{2m}-$ dar, so kann es sich um geradkettige oder verzweigte Reste handeln wie Ethylen, Propylen, Trimethylen, Tetramethylen, Hexamethylen, Octamethylen und Dodecamethylen. Bedeutet R eine Gruppe der Formel II, so ist diese vorzugsweise in 4,4'-Stellung an die N-Atome gebunden.

Vorzugsweise bedeutet R eine Gruppe $-(CH_2)_m-$ mit m = 2 bis 12.

R kann in der Bedeutung einer Arylengruppe mit 6 - 10 C-Atomen z. B. eine m-Phenylen-, p-Phenylen-, 1,3-Naphthylen-, 1,4-Naphthylen- oder 1,5-Naphthylengruppe bedeuten.

Wenn R eine Gruppe der Formel II bedeutet, steht T vorzugsweise für die Methylengruppe, O oder $SO_2$.

Bevorzugt verwendet man Verbindungen der Formel I, worin G die unter Formel I angegebene Bedeutung hat, E Allyl bedeutet und R, falls n = 1 ist, für Wasserstoff, Alkyl mit 1 - 8 C-Atomen, Allyl, Cyclohexyl, Phenyl oder Benzyl steht, oder, falls n = 2 ist, für $-(CH_2)_m-$ mit m = 2 - 12, m- oder p-Phenylen oder für eine Gruppe der Formel II steht, worin T die Methylengruppe, O oder $SO_2$ bedeutet.

Besonders bevorzugt verwendet man Verbindungen der Formel I, worin E die Allylgruppe, G Wasserstoff n

die Zahl 2 und R $-(CH_2)_2-$, $-(CH_2)_6$
oder

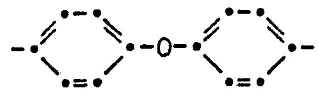

und insbesondere

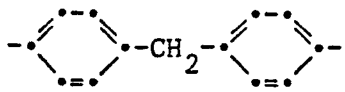

bedeuten.

Man kann erfindungsgemäss auch Mischungen verschiedener bicyclischer Imide der Formel I verwenden.

Die erfindungsgemäss einzusetzenden Imide können auf an sich bekannte Weise z. B. durch Umsetzen eines Anhydrids der Formel III

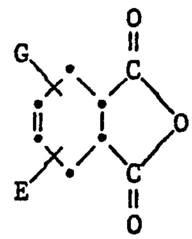

(III)

mit einer Verbindung der Formel IV

$(H_2N-)_n-R$ (IV),

worin E, G, R und n die unter Formel I angegebene Bedeutung haben, bei erhöhter Temperatur und unter Abdestillieren des bei der Reaktion entstehenden Wassers hergestellt werden. Sofern es sich bei den Verbindungen der Formel IV um Ammoniak oder niedrigsiedende Monoamine handelt, ist ein Überschuss dieser Reaktanden zu empfehlen. Diamine sind vorteilhaft in stöchiometrischem Verhältnis einzusetzen. Die Umsetzung kann ohne Lösungsmittel oder in Gegenwart eines inerten Lösungsmittels, das für die azeotrope Entfernung des Wassers verwendbar ist (Schleppmittel) erfolgen. Die Temperatur der Umsetzung kann zwischen 100 und 250° C liegen. Bevorzugt werden die Imide der Formel I in der Schmelze bei einem Druck von höchstens 4500 Pa bei Temperaturen zwischen 130 und 220° C, insbesondere 180 und 220° C, hergestellt.

Die Ausgangsstoffe der Formel III können gemäss dem in der US Patentschrift 3 105 839 beschriebenen Verfahren hergestellt werden indem man Natrium-Cyclopentadienid oder -Methylcyclopentadienid mit einem Allyl- oder Methallylhalogenid umsetzt, worauf sich eine Diels-Alder-Reaktion mit Maleinsäureanhydrid anschliesst. Obgleich in der US Patentschrift angegeben wird, dass die Allyl- bzw. Methallylgruppe in 7-Stellung des bicyclischen Systems gebunden ist, zeigen neuere Untersuchungen, dass eine isomere Mischung in Bezug auf die Stellung der Allylgruppe und auch auf die Endo- und Exokonfiguration des Anhydridteils gebildet wird. Die isomeren Komponenten konnten bisher nur durch Gaschromatographie isoliert werden.

Die verwendeten Monoamine oder Diamine der Formel IV sind bekannt oder können nach an sich bekannten Verfahren hergestellt werden.

Die einzusetzenden Verbindungen der Formel I sind flüssige oder niedrigschmelzende feste Stoffe, die gemäss dem vorliegenden Verfahren zu erfindungsgemässen festen Produkten mit hoher Glasumwandlungstemperatur und Wärme- und Wasserbeständigkeit polymerisiert werden können. Diese Produkte können vielseitig angewendet werden, z. B. als Giessharze oder Klebstoffe und insbesondere zur Herstellung von hitzebeständigen Verbundwerkstoffen, sowie als elektrische Isolierstoffe und Wirbelsinterpulverlacke.

Die Konzentration des gemäss der vorliegenden Erfindung zu verwendenden Katalysators liegt zweckmässig zwischen 0,1 und 5,0, vorzugsweise zwischen 0,25 und 4,0 und besonders bevorzugt zwischen 0,5 und 2,0 Gew.-%, bezogen auf die Verbindung der Formel I.

Als Polymerisationskatalysatoren können gemäss der Erfindung Säuren oder säurefreisetzende Derivate von Säuren eingesetzt werden. Im Prinzip können an sich beliebige Säuren oder Säurederivate, die eine geeignete Acidität besitzen und sich bei den Polymerisationstemperaturen nicht zersetzen oder verflüchtigen, eingesetzt werden.

Geeignete Katalysatoren sind z. B. Brønsted-Oxosäuren oder Derivate davon, besonders deren Ester, Anhydride, Halogenide, oder Amide bzw. Ammoniumsalze mit Stickstoff enthaltenden organischen Basen.

Als Oxosäuren können z. B. anorganische bzw. Mineralsäuren oder organische Säuren, wie z. B. organische Phosphor-Sauerstoff-Säuren, organische Schwefel-Sauerstoff-Säuren oder Halogen enthaltende Carbonsäuren genannt werden.

Als Mineralsäure können z. B. genannt werden Perchlorsäure, Fluorsulfonsäure, Chlorsulfonsäure, Schwefelsäure, Phosphorsäure, Polyphosphorsäure, phosphorige Säure und unterphosphorige Säure.

Geeignete organische Phosphor-Sauerstoff-Säuren sind z. B. Phosphon- und Phosphinsäuren. Es kommen jeweils P-Alkyl oder P-Arylderivate in Frage, z. B. bevorzugt solche mit je 1 - 6 C-Atomen in den Alkylgruppen bzw. 6 - 10 C-Atomen in den Arylgruppen, insbesondere die Phenylphosphon- bzw. Phenylphosphinsäure.

Als organische Schwefel-Sauerstoffsäuren können z. B. aliphatische und besonders aromatische Sulfonsäuren, wie Methansulfonsäure, Benzolsulfonsäure, Naphthalin-2-sulfonsäure, oder insbesondere p-Toluolsulfonsäure, verwendet werden. Die Sulfonsäuren können auch weitere Substituenten, wie z. B. Halogen, Cyano, Nitro, Hydroxy, Alkoxy oder Alkyl mit bis zu 4 C-Atomen, im Ring enthalten.

Als Halogen enthaltende Carbonsäuren kommen z. B. Chloressigsäure, Dichloressigsäure, Trichloressigsäure und Trifluoressigsäure in Frage.

Als Ester-Derivate von Oxosäuren kommen besonders Alkyl-, Aralkyl- oder Arylester in Frage. Beispiele von Alkoholen oder gegebenenfalls substituierten Phenolen, deren Ester als Katalysatoren eingesetzt werden können sind u.a. Alkohole mit bis zu 10 C-Atomen, wie Butanol, 1,4-Butandiol, Amylalkohol, 2-Ethylhexanol; Benzylalkohol, Naphthol, Cresol, Xylenol und insbesondere Phenol. Es können beispielsweise die folgenden Ester verwendet werden: 1,4-Butandiol-bis-p-toluolsulfonat, Amyl-Benzolsulfonat, 2-Ethylhexyl-Benzolsulfonat, Di-n-butyl- und Diphenylphosphat, Di-n-butyl-, Diphenyl- und Triphenylphosphit.

Ferner kann als Oxosäure Borsäure verwendet werden. Als Anhydride kommen z. B. Benzolsulfonsäure-, p-Toluolsulfonsäure-, Trifluormethansulfonsäure- und Trifluoressigsäureanhydrid in Frage.

Als Säurehalogenide kommen z. B. Fluoride, Bromide, Iodide und insbesondere Chloride der oben genannten Oxosäuren in Frage.

Zur Amid- bzw. Ammoniumsalzbildung mit den oben genannten Säuren eignen sich Stickstoff enthaltende organische Basen wie aliphatische cycloaliphatische, araliphatische und aromatische primäre, sekundäre und tertiäre Amine, sowie gesättigte und ungesättigte Stickstoff enthaltende heterocyclische Basen.

Beispielsweise können aliphatische primäre Amine mit vorzugsweise 1 - 18 C-Atomen, wie Methylamin, Ethylamin, n-Butylamin, n-Octylamin, n-Dodecylamin und Hexamethylendiamin, aliphatische sekundäre Amine mit vorzugsweise 2 - 16 C-Atomen wie Dimethylamin, Diethylamin, Di-n-propylamin und Diisobutylamin, aliphatische tertiäre Amine mit je 1 - 20 C-Atomen in den Alkylgruppen, wie Triethylamin, Tri-n-butylamin, cycloaliphatische primäre Amine wie Cyclohexylamin, cycloaliphatische sekundäre Amine, wie Dicyclohexylamin, gegebenenfalls substituierte aromatische primäre Amine, wie Anilin, Toluidin, Naphthylamin, aromatische tertiäre Amine, wie N,N-Diethylanilin, gesättigte und ungesättigte Stickstoff enthaltende heterocyclische Basen, wie Pyrrolidin, Imidazolidin, Piperidin, N-Methyl-2-pyrrolidin, Pyrazolidin, Piperazin, Pyridin, Imidazol und Pyrazol oder Morpholin, eingesetzt werden.

Unter den Amiden sind z. B. 1-p-Toluolsulfonylimidazol und Benzolsulfonylimidazol brauchbare Katalysatoren.

Weiterhin können als Katalysatoren gemäss der Erfindung Lewis-Säuren oder Komplexe von Lewis-Säuren mit Basen, insbesondere mit Aminen, z. B. solchen der oben beschriebenen Art, Amiden oder Phosphinen eingesetzt werden.

Geeignete Lewis-Säuren sind z. B. Halogenide von Elementen aus der Gruppe II, III, IV oder V des periodischen Systems der Elemente.

Besonders geeigente Lewis-Säuren sind Eisentrichlorid, Zinntetrachlorid, Antimonpentafluorid und insbesondere Aluminiumchlorid, Zinkchlorid, Bortrichlorid und Bortrifluorid.

Die katalytische Aktivität der erfindungsgemäss verwendeten Lewis-Säuren kann gewünschtenfalls durch die Zugabe kleiner Mengen von Verbindungen, die saure Wasserstoffatome enthalten, wie Säuren, Phenole, Alkohole oder Wasser, erhöht werden.

Komplexe von Lewis-Säuren, die erfindungsgemäss als Katalysatoren eingesetzt werden können, sind u.a. der Ethylamin/Bortrichlorid-Komplex, der N,N-Dimethyl-n-octylamin/Bortrichlorid-Komplex, der Acetylacetanilid/Bortrifluorid-Komplex, der Dimethylanilin-Bortrichlorid-Komplex sowie der Tri-n-octylphosphin/Bortrichlorid-Komplex.

Besonders bevorzugt als Katalysatoren sind p-Toluolsulfonsäure, Amyl-Benzolsulfonat, 2-Hydroxycyclohexyl-p-toluolsulfonat, Diphenylphosphit oder der Bortrichlorid/Ethylamin-Komplex. Ganz besonders bevorzugt als Katalysator ist Diphenylphosphit.

Es kann auch ein Gemisch von mehreren der oben beschriebenen Katalysatoren erfindungsgemäss eingesetzt werden.

Die erfindungsgemässe Umsetzung erfolgt bevorzugt in der Schmelze oder teilweise in der Schmelze und teilweise in der festen Phase. Sie kann aber auch in Lösung durchgeführt werden. In den meisten Fällen erübrigt sich jedoch ein Zusatz von Lösungsmitteln, weil die Ausgangsgemische als solche bereits flüssige oder niedrigschmelzende feste Stoffe sind.

Als Lösungsmittel eignen sich z. B. aromatische Kohlenwasserstoffe wie Benzol, Toluol und Xylol, ferner Tetralin und Decalin sowie chlorierte Kohlenwasserstoffe wie Ethylenchlorid und Chlorbenzol sowie Glykolether wie z. B. der Monomethyl, -ethyl, -butyl und -phenylether von Ethylen- und Diethylenglykol.

Das erfindungsgemässe Verfahren kann in folgender Weise auch zweistufig ausgeführt werden. Nach dem Mischen und gegebenenfalls nach einer anschliessenden Vermahlung aller Ausgangsprodukte werden das Pulver oder die Flüssigkeit zunächst eine begrenzte Zeit lang vorzugsweise auf 120 - 170°C erhitzt. Es entsteht

ein noch thermisch verformbares, teilweise lösliches Produkt. Dieses Präpolymer muss gegebenenfalls wieder zu einem verarbeitbaren Pulver vermahlen werden, bevor es bei der Endverarbeitung endgültig gehärtet wird. Die Präpolymerisation kann auch durch Erhitzen einer Lösung oder Suspension der Ausgangsmaterialien erfolgen.

Die erfindungsgemässe Herstellung der Imidgruppen aufweisenden, vernetzten Polymeren erfolgt in der Regel unter gleichzeitiger Formgebung zu Formkörpern, Flächengebilden, Laminaten, Verklebungen, Schaumstoffen. Dabei können den härtbaren Massen die in der Technologie der härtbaren Kunststoffe gebräuchlichen Zusätze wie Füllstoffe, Weichmacher, Pigmente, Farbstoffe, Formtrennmittel, flammhemmende Stoffe zugesetzt werden. Als Füllstoffe können zum Beispiel Glasfasern, Kohlenstoffasern, Glimmer, Graphit, Quarzmehl, Kaolin, kolloidales Silizium-dioxid oder Metallpulver verwendet werden, als Formtrennmittel können zum Beispiel Silikonöl, verschiedene Wachse, Zink- oder Calciumstearat dienen.

Die Formgebung der nach dem erfindungsgemässen Verfahren herstellbaren Produkte kann in manchen Fällen nach dem Giessverfahren unter Anwendung einer Giessform erfolgen.

Die Formgebung kann aber auch nach dem Heisspressverfahren unter Anwendung einer Presse durchgeführt werden. Meistens genügt es, dass man nur kurz auf Temperaturen von 160 bis 220°C bei einem Druck von $9{,}81 \cdot 10^4$ bis $1{,}96 \cdot 10^7$ Pa erhitzt, und den so erhaltenen Formling ausserhalb der Presse vollständig aushärtet.

Ein weiterer Gegenstand der Erfindung sind lagerstabile heisshärtbare (vernetzbare) Stoffgemische, die

a) eine Verbindung der Formel I

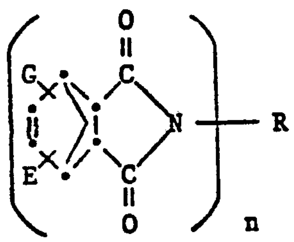

(I),

worin E Allyl oder Methallyl, G Wasserstoff oder Methyl und n 1 oder 2 bedeuten und R, falls n 1 bedeutet, für Wasserstoff, Alkyl mit 1 - 12 C-Atomen, Alkenyl mit 3 - 6 C-Atomen, Cycloalkyl mit 5 - 8 C Atomen, Aryl mit 6 - 10 C-Atomen oder Benzyl oder, falls n 2 bedeutet, für $-C_mH_{2m}-$ mit m = 2 - 20, Arylen mit 6 - 10 C-Atomen oder für eine Gruppe der Formel II

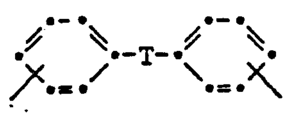

(II),

worin T Methylen, Isopropyliden, CO, O, S oder $SO_2$ bedeutet, steht und

b) einen oder mehrere für die kationische Polymerisation geeignete Katalysatoren enthalten.

**A) Herstellung der Monomere**

Beispiel 1: Bis[4-(allyl-bicyclo[2.2.1]hept-5-en-2,3-dicarbonsäureimidophenyl)]methan

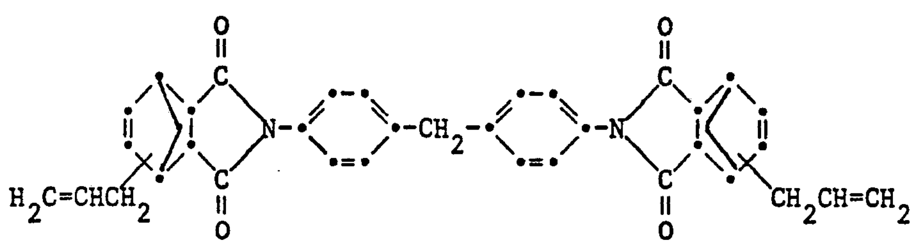

204 g Allyl-bicyclo[2.2.1]hept-5-en-2,3-dicarbonsäureanhydrid, welches 30 ppm Ferrocen enthält, werden auf 130°C erhitzt. Man gibt portionenweise unter Rühren 99 g 4,4'-Diaminodiphenylmethan bei, und destilliert das entstehende Wasser ab. Die Temperatur wird auf 200°C erhöht, und der Druck auf 25 Pa gesenkt. Nach drei Stunden unter diesen Bedingungen erhält man 257,6 g eines orangefarbenen Harzes mit einem Erweichungspunkt von 80°C und einer Säurezahl < 1.

| Analyse | % C | % H | % N |
|---|---|---|---|
| berechnet für $C_{37}H_{34}N_2O_4$ | 77,87 | 6,01 | 4,91 |
| gefunden | 78,1 | 5,9 | 5,9 |

$\bar{M}_n = 700$, $\bar{M}_w = 1615$, bestimmt durch Gelpermeationschromatographie.

Beispiel 2: Allyl-methylbicyclo[2.2.1]hept-5-en-2,3-dicarbonsäure-N-allylimid

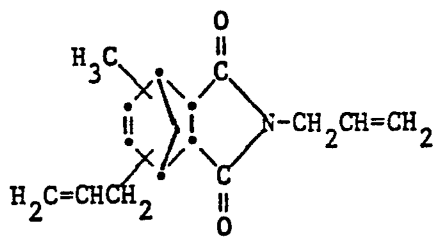

Man erhitzt eine Mischung aus 30 g Allyl-methylbicyclo[2.2.1]hept-5-en-2,3-dicarbonsäureanhydrid und 9,41 g Allylamin während 2 Stunden auf Rückfluss, destilliert Wasser ab und rektifiziert das Produkt bei 119 - 127°C und 2,66 Pa. Man erhält 30,24 g (85,5 % der Theorie) eines hellgelben Öls mit folgenden Kenndaten: $n^{20}_D = 1,5202$, $\eta_{25} = 0,135$ Pa.s.

| Analyse: | % C | % H | % N |
|---|---|---|---|
| berechnet für $C_{16}H_{19}NO_2$: | 74,68 | 7,84 | 5,44 |
| gefunden: | 74,66 | 7,55 | 5,22 |

Die Polymerisation während 48 Stunden bei 250°C ergibt einen Festkörper mit einer Tg > 250°C dessen IR-Spektrum keine

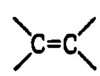

Absorptionsfrequenzen (1639,2 und 1653,4 $cm^{-1}$) aufweist.

Beispiel 3: Bis[4-(methallyl-bicyclo[2.2.1]hept-5-en-2,3-dicarbonsäureimidophenyl)]methan

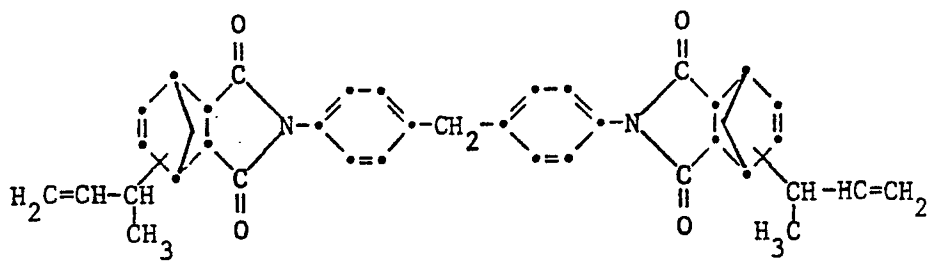

218 g Methallyl-bicyclo[2.2.1]hept-5-en-2,3-dicarbonsäureanhydrid (Kp = 139 - 142°C bei 20 Pa) und 99 g 4,4'-Diaminodiphenylmethan werden im Vakuum auf 200°C erhitzt und 1 Stunde bei dieser Temperatur gehalten. Man erhält 295 g eines braunen Festharzes mit einem Erweichungspunkt von 98°C und einer Säurezahl von 2 mg KOH/g.

| Analyse: | % C | % H | % N |
|---|---|---|---|
| berechnet für $C_{39}H_{38}N_2O_4$: | 78,24 | 6,40 | 4,69 |
| gefunden: | 78,3 | 6,1 | 4,8 |

Beispiel 4: Bis[4-(methallyl-methyl-bicyclo[2.2.1]hept-5-en-2,3-dicarbonsäureimidophenyl)]sulfon

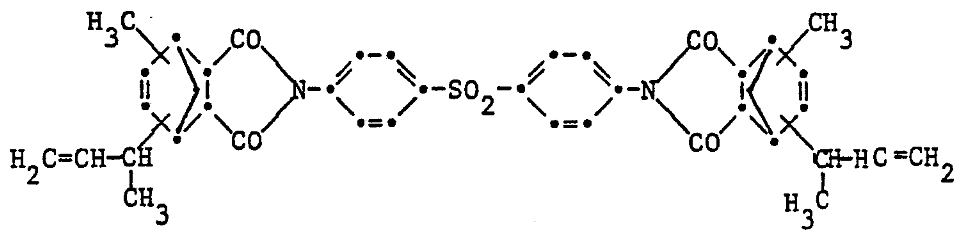

Man erhitzt 124,15 g 4,4'-Diaminodiphenylsulfon und 232 g Methallyl-methylbicyclo[2.2.1]hept-5-en-2,3-dicarbonsäureanhydrid auf 180°C und erniedrigt den Druck sukzessive auf 25 Pa.

Nach 90 min bei 180°C und 25 Pa erhält man 319,55 g eines braunen Festharzes mit einer Glasumwandlungstemperatur von 87°C.

| Analyse: | % C | % H | % N | % S |
|---|---|---|---|---|
| berechnet für $C_{40}H_{40}N_2O_6S$: | 70,98 | 5,96 | 4,14 | 4,74 |
| gefunden: | 69,98 | 5,91 | 4,35 | 4,98 |

Das Anhydrid wird analog den Beispielen 1 und 2 der US Patentschrift 3 105 839 hergestellt. Anstelle von 840 g Allylchlorid verwendet man 994 g Methallylchlorid. Das bisher in der Literatur nicht beschriebene Anhydrid destilliert bei 125 - 140°C, 25 Pa und hat ein $n^{20}_D$ = 1,5085 und eine Viskosität von 195 cP.

Beispiel 5: N,N'-Hexamethylen-bis-(allyl-bicyclo[2.2.1]hept-5-en-2,3-dicarbonsäureimid).

Eine Mischung aus 204 g Allyl-bicyclo[2.2.1]hept-5-en-2,3-dicarbonsäureanhydrid und 58 g Hexamethylendiamin wird im Verlaufe von 3 Stunden unter Rühren an absteigenden Kühler auf 175°C erhitzt. Danach wird der Druck auf 1866 Pa reduziert und die Mischung eine weitere Stunde bei 175°C gerührt. Man erhält 235 g eines bernsteinfarbenen Harzes, das bei Raumtemperatur gerade noch flüssig ist.

| Analyse: | % C | % H | % N |
|---|---|---|---|
| berechnet für $C_{30}H_{36}N_2O_4$: | 73,74 | 7,43 | 5,73 |
| gefunden: | 73,4 | 7,4 | 5,5 |

**B) Kationische Polymerisation**

Beispiele I - XLI:

10 g Bis[4-(allyl-bicyclo[2.2.1]hept-5-en-2,3-dicarbonsäureimidophenyl)]methan (hergestellt gemäss Beispiel I), werden aufgeschmolzen, jeweils mit der in der Tabelle angegebenen Menge des Katalysators vermischt und in einem Aluminiumschälchen 4 Stunden bei 190°C an der Luft erhitzt. (Dies ist ein Härtungszyklus, der bei der Herstellung von hochwertigen, hitzebeständigen Verbundwerkstoffen Anwendung findet.) Nach dem Abkühlen der vernetzten Polymere wird die Glasumwandlungstemperatur mit einem Thermoanalyzer TA 2000 der Fa. Mettler (Greifensee, CH) bestimmt. Die Ergebnisse sind in Tabelle 1 dargestellt.

**Tabelle I**: Ausführungsbeispiele mit verschiedenen Katalysatoren

| Beispiel Nr. | Katalysator | mg/10 g Polymer | Tg (°C) |
|---|---|---|---|
| I | p-Toluolsulfonsäure | 10 | 150 |
| II | p-Toluolsulfonsäure | 25 | 213 |
| III | p-Toluolsulfonsäure | 50 | > 235 |
| IV | p-Toluolsulfonsäure | 100 | 250 |
| V | 1,4-Butandiol-bis-p-toluolsulfonat | 200 | 156 |
| VI | Amyl-benzolsulfonat | 100 | > 250 |
| VII | 2-Ethylhexyl-benzolsulfonat | 200 | 225 |
| VIII | Benzolsulfochlorid | 100 | 159 |
| IX | Naphthalin-2-sulfonsäure | 50 | > 250 |
| X | 1-(p-Toluolsulfonyl)imidazol | 200 | 249 |
| XI | Phosphorsäure 85 %-ig | 25 | 182 |
| XII | Phosphorsäure 85 %-ig | 50 | 247 |
| XIII | Phosphorsäure 85 %-ig | 100 | 280 |

| | | | |
|---|---|---|---|
| XIV | Polyphosphorsäure | 25 | 284 |
| XV | Dibutylphosphat | 50 | 120 |
| XVI | Dibutylphosphat | 100 | 250 |
| XVII | Diphenylphosphat | 50 | 221 |
| XVIII | Diphenylphosphat | 100 | 280 |
| XIX | Phosphorige Säure | 50 | 234 |
| XX | Dibutylphosphit | 50 | 102 |
| XXI | Dibutylphosphit | 100 | > 250 |
| XXII | Diphenylphosphit | 50 | 164 |
| XXIII | Diphenylphosphit | 100 | 284 |
| XXIV | Triphenylphosphit | 200 | 165 |
| XXV | Phenylphosphinsäure | 100 | > 250 |
| XXVI | Phenylphosphonsäure | 100 | > 250 |
| XXVII | Dichlorphenylphosphin | 200 | 281 |
| XXVIII | Borsäure | 200 | 161 |
| XXIX | Aluminiumchlorid | 25 | 182 |
| XXX | Aluminiumchlorid | 50 | 246 |
| XXXI | Aluminiumchlorid | 100 | 261 |
| XXXII | Zinkchlorid | 100 | > 250 |
| XXXIII | $CH_3CH_2NH_2 \cdot BCl_3$ | 50 | 170 |
| XXXIV | $CH_3CH_2NH_2 \cdot BCl_3$ | 100 | 232 |
| XXXV | $n\text{-}C_8H_{17}N(CH_3)_2 \cdot BCl_3$ | 50 | 160 |
| XXXVI | $n\text{-}C_8H_{17}N(CH_3)_2 \cdot BCl_3$ | 100 | 177,5 |
| XXXVII | $n\text{-}C_8H_{17}N(CH_3)_2 \cdot BCl_3$ | 200 | 242,5 |
| XXXVIII | 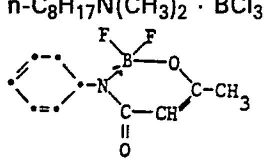 | 100 | 140,5 |
| XXXIX | 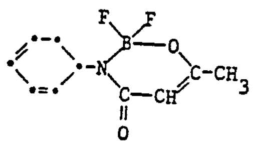 | 200 | 250 |
| XL | 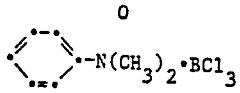 | 200 | 236 |
| XLI | $(C_8H_{17})_3P \cdot BCl_3$ | 200 | 144 |

Beispiele XLII - XLIV:

Die in der Tabelle 2 angegebenen Gemische von Imiden hergestellt gemäss Beispiel 1, 2 3 bzw. 4, werden aufgeschmolzen, werden jeweils mit der angegebenen Menge Chlorsulfonsäure als Katalysator vermischt (die Chlorsulfonsäure wurde jeweils im Imid gemäss Beispiel 2 gelöst) und in einem Aluminiumschälchen 4 Stunden bei 190°C an der Luft erhitzt. Nach dem Abkühlen der vernetzten Polymere wird die Glasumwandlungstemperatur bestimmt.

**Tabelle 2:**

| Beispiel Nr. | Imidgemäss Beispiel | Menge Imid (g) | Menge $ClSO_3H$ (g) | Tg (°C) |
|---|---|---|---|---|
| XLII | 1 | 19,0 | | |
| | 2 | 1,0 | 0,1 | 208 |
| XLIII | 3 | 18,0 | | |
| | 2 | 2,0 | 0,2 | 195 |
| XLIV | 4 | 18,0 | | |
| | 2 | 2,0 | 0,2 | 178 |

Beispiel XLV:

1 g Diphenylphosphit wird in 100 g einer Schmelze des Imids hergestellt gemäss Beispiel 1 gelöst, die Schmelze wird in eine vorerhitzte Stahlform von 120 x 120 x 4 mm³ gegossen, und 1 Stunde bei 190 und 2 Stunden bei 250°C gehärtet. Man erhält eine einwandfreie Prüfplatte mit den folgenden Eigenschaften:

| | |
|---|---|
| Biegefestigkeit (DIN 53452 | 38,5 N/mm²: |
| Schlagbiegefestigkeit (DIN 53455): | 3 kJ/m² |
| Wärmeformbeständigkeit (ISO 75): | 265°C |

Beispiele XLVI und XLVII:

Die in der Tabelle 3 angegebenen Imide werden jeweils aufgeschmolzen und mit der angegebenen Menge 2-Hydroxycyclohexyl-p-toluolsulfonat (Fp = 93 - 95°C, hergestellt aus Cyclohexenoxid und p-Toluolsulfonsäuremonohydrat) als Katalysator 4 Stunden bei 190 und 2 Stunden bei 250°C gehärtet. An den so erhaltenen Prüfkörpern werden die folgenden Eigenschaften bestimmt.

**Tabelle 3:**

| Beispiel | XLVI | XLVII |
|---|---|---|
| Imid gemäss Beispiel | 1 | 5 |
| Menge Katalysator (Gew.-%) | 0,5 | 1,0 |
| Biegefestigkeit, DIN 53452, (N/mm²) | 64,6 | 121,2 |
| Elongation, DIN 53455, (%) | 2,2 | 5,0 |
| Schlagbiegefestigkeit, DIN 53455, (kJ/m²) | 6,85 | 13,8 |
| Glasumwandlungstemperatur, Mettler TA 2000, (°C) | 282,5 | 215 |
| Wasseraufnahme, 1 h 100°C (Gew.-%) | 0,45 | 0,51 |
| Wasseraufnahme, 4 Tage 25°C (Gew.-%) | 1,10 | 0,79 |

**Patentansprüche**

1. Verfahren zur Herstellung von vernetzten Polymeren, dadurch gekennzeichnet, dass man Imide der Formel I

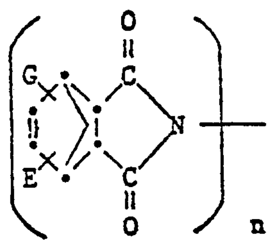

(I),

worin E Allyl oder Methallyl, G Wasserstoff oder Methyl und n 1 oder 2 bedeuten und R, falls n 1 bedeutet, für Wasserstoff, Alkyl mit 1 - 12 C-Atomen, Alkenyl mit 3 - 6 C-Atomen, Cycloalkyl mit 5 - 8 C-Atomen, Aryl mit 6 - 10 C-Atomen oder Benzyl oder, falls n 2 bedeutet, für $-C_mH_{2m}-$ mit m = 2 - 20, Arylen mit 6 - 10 C Atomen oder für eine Gruppe der Formel II

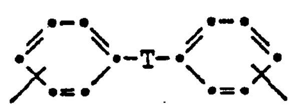

(II),

worin T Methylen, Isopropyliden, CO, O, S oder $SO_2$ bedeutet, steht, in Gegenwart mindestens eines für die kationische Polymerisation geeigneten Katalysators erhitzt.

2. Verfahren nach Anspruch 1, worin der Katalysator in einer Menge zwischen 0,1 und 5,0, vorzugsweise zwischen 0,25 und 4,0 Gew.-%, bezogen auf die Verbindung der Formel I eingesetzt wird.

3. Verfahren nach Anspruch 1, worin der Katalysator eine Säure oder ein säurefreisetzendes Derivat einer Säure ist.

4. Verfahren nach Anspruch 1, worin der Katalysator eine Brønsted-Oxosäure oder deren Ester, Anhydrid, Halogenid oder Amid bzw. Ammoniumsalz mit Stickstoff enthaltenden organischen Basen ist.

5. Verfahren nach Anspruch 4, worin die Oxosäure eine anorganische Säure oder eine organische Phosphor-Sauerstoff-Säure, organische Schwefel-Sauerstoff-Säure oder eine Halogen enthaltende Carbonsäure ist.

6. Verfahren nach Anspruch 4, worin die Oxosäure eine unterphosphorige Säure, eine Phosphon- oder eine Phosphinsäure, vorzugsweise Phenylphosphon- bzw. Phenylphosphinsäure ist.

7. Verfahren nach Anspruch 4, worin die Oxosäure eine aliphatische und besonders aromatische Sulfonsäure ist.

8. Verfahren nach Anspruch 4, worin die Oxosäure Methansulfonsäure, Benzolsulfonsäure, Naphthalin-2-sulfonsäure und insbesondere p-Toluolsulfonsäure ist.

9. Verfahren nach Anspruch 1, worin der Katalysator eine Lewis-Säure oder ein Komplex einer Lewis-Säure

mit einer Base, vorzugsweise mit einem Amin, Amid oder Phosphin, ist.

10. Verfahren nach Anspruch 9, worin die Lewis-Säure ein Halogenid eines Elements aus der Gruppe II, III, IV oder V des periodischen Systems der Elemente ist.

11. Verfahren nach Anspruch 9, worin die Lewis-Säure Eisentrichlorid, Zinntetrachlorid, Antimonpentafluorid und insbesondere Aluminiumchlorid, Zinkchlorid, Bortrichlorid oder Bortrifluorid ist.

12. Verfahren nach Anspruch 1, worin der Katalysator P-Toluolsulfonsäure, Amyl-Benzolsulfonat, 2-Hydroxycyclohexyl-p-toluolsulfonat, Diphenylphosphit oder der Bortrichlorid/Ethylamin-Komplex ist.

13. Verfahren nach Anspruch 1, worin der Katalysator Diphenylphosphit ist.

14. Lagerstabile heisshärtbare Stoffgemische, dadurch gekennzeichnet, dass sie

a) eine Verbindung der Formel I

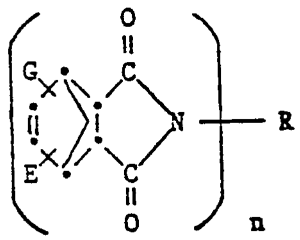

(I),

worin E Allyl oder Methallyl, G Wasserstoff oder Methyl und n 1 oder 2 bedeuten und R, falls n 1 bedeutet, für Wasserstoff, Alkyl mit 1 - 12 C-Atomen, Alkenyl mit 3 - 6 C-Atomen, Cycloalkyl mit 5 - 8 C-Atomen, Aryl mit 6 - 10 C-Atomen oder Benzyl oder, falls n 2 bedeutet, für $-C_mH_{2m}-$ mit m = 2 - 20, Arylen mit 6 - 10 C Atomen oder für eine Gruppe der Formel II

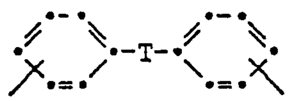

(II),

worin T Methylen, Isopropyliden, CO, O, S oder $SO_2$ bedeutet, steht und

b) einen oder mehrere für die kationische Polymerisation geeignete Katalysatoren enthalten.

## Claims

1. A process for preparing crosslinked polymer, wherein an imide of the formula I

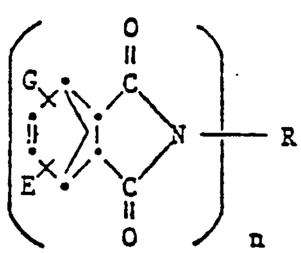

(I),

in which E is allyl or methallyl, G is hydrogen or methyl and n is 1 or 2, and, if n is 1, R is hydrogen, alkyl having 1 - 12 C atoms, alkenyl having 3 - 6 C atoms, cycloalkyl having 5 - 8 C atoms, aryl having 6 - 10 C atoms or benzyl, or, if n is 2, R is $-C_mH_{2m}-$ in which m is 2 - 20, arylene having 6 - 10 C atoms or a group of the formula II

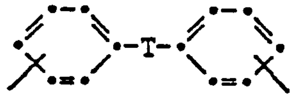

(II),

in which T is methylene, isopropylidene, CO, O, S or $SO_2$, is heated in the presence of at least one catalyst suitable for cationic polymerization.

2. A process according to claim 1, wherein the catalyst is employed in an amount between 0.1 and 5.0, preferably between 0.25 and 4.0, % by weight, based on the compound of the formula I.

3. A process according to claim 1, wherein the catalyst is an acid or a derivative of an acid which liberates acid.

4. A process according to claim 1, wherein the catalyst is a Brønsted oxo acid or an ester, anhydride, halide, or an amide or ammonium salt thereof with organic bases containing nitrogen.

5. A process according to claim 4, wherein the oxo acid is an inorganic acid or an organic phosphorus-oxygen acid, an organic sulfur-oxygen acid or a carboxylic acid containing halogen.

6. A process according to claim 4, wherein the oxo acid is a hypophosphorous acid, a phosphonic acid or a phosphinic acid, preferably phenylphosphonic acid or phenylphosphinic acid.

7. A process according to claim 4, wherein the oxo acid is an aliphatic sulfonic acid, particularly an aromatic sulfonic acid.

8. A process according to claim 4, wherein the oxo acid is methanesulfonic acid, benzenesulfonic acid, naphthalene-2-sulfonic acid and, in particular, p-toluenesulfonic acid.

9. A process according to claim 1, wherein the catalyst is a Lewis acid or a complex of a Lewis acid with a base, preferably with an amine, amide or phosphine.

10. A process according to claim 9, wherein the Lewis acid is a halide of an element from group II, III, IV or V of the periodic system of the elements.

11. A process according to claim 9, wherein the Lewis acid is iron trichloride, tin tetrachloride, antimony penta-fluoride and, particularly, aluminium chloride, zinc chloride, boron trichloride or boron trifluoride.

12. A process according to claim 1, wherein the catalyst is p-toluenesulfonic acid, amyl benzenesulfonate, 2-hydroxy-cyclohexyl p-toluenesulfonate, diphenyl phosphite or the boron trichloride/ethylamine complex.

13. A process according to claim 1, wherein the catalyst is diphenyl phosphite.

14. A thermosetting composition of matter which is stable on storage and which contains

a) a compound of the formula

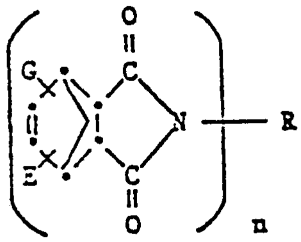

(I),

in which E is allyl or methallyl, G is hydrogen or methyl and n is 1 or 2, and, if n is 1, R is hydrogen, alkyl having 1 - 12 C atoms, alkenyl having 3 - 6 C atoms, cycloalkyl having 5 - 8 C atoms, aryl having 6 - 10 C atoms or benzyl, or, if n is 2, R is $-C_mH_{2m}-$ in which m is 2 - 20, arylene having 6 - 10 C atoms or a group of the formula

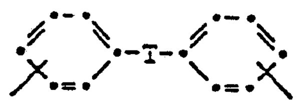

(II),

in which T is methylene, isopropylidene, CO, O, S or $SO_2$, and b) one or more catalysts suitable for cationic polymerization.

**Revendications**

1. Procédé de préparation de polymères réticulés, procédé caractérisé en ce qu'on chauffe des imides répondant à la formule I:

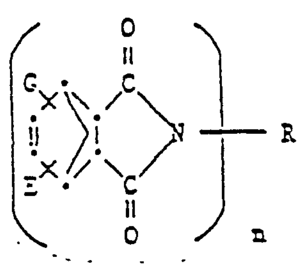

(I)

dans laquelle E représente un radical allyle ou méthallyle, G représente l'hydrogène ou un radical méthyle, n est égal à 1 ou à 2, et R représente, dans le cas où n est égal à 1, l'hydrogène, un alkyle en $C_1$-$C_{12}$, un alcényle en $C_3$-$C_6$, un cycloalkyle en $C_5$-$C_8$, un aryle en $C_6$-$C_{10}$ ou un benzyle, ou, dans le cas où n est égal à 2, un radical $-C_mH_{2m}-$ dans lequel m désigne un nombre de 2 à 20, un radical arylène en $C_6$-$C_{10}$ ou un radical de formule II:

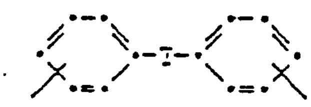 (II),

dans lequel T représente un méthylène, un isopropylidène, CO, O, S ou $SO_2$,

en présence d'au moins un catalyseur approprié pour la polymérisation cationique.

2. Procédé selon la revendication 1 dans lequel le catalyseur est mis en jeu en une quantité comprise entre 0,1 et 5,0 % en poids, de préférence entre 0,25 et 4,0 % en poids, par rapport au composé de formule I.

3. Procédé selon la revendication 1 dans lequel le catalyseur est un acide ou un dérivé d'acide capable de libérer un acide.

4. Procédé selon la revendication 1 dans lequel le catalyseur est un oxo-acide de Brønsted, ou l'un de ses esters, anhydrides ou halogénures, ou l'un de ses amides ou sels d'ammoniums dérivant de bases organiques contenant de l'azote.

5. Procédé selon la revendication 4 dans lequel l'oxo-acide est un acide inorganique, un acide oxygéné du phosphore organique, un acide oxygéné du soufre organique ou un acide carboxylique contenant un halogène.

6. Procédé selon la revendication 4 dans lequel l'oxo-acide est un acide hypophosphoreux, un acide phosphonique ou un acide phosphinique, de préférence l'acide benzène-phosphonique ou l'acide benzène-phosphinique.

7. Procédé selon la revendication 4 dans lequel l'oxo-acide est un acide sulfonique aliphatique ou, mieux, aromatique.

8. Procédé selon la revendication 4 dans lequel l'oxo-acide est l'acide méthane-sulfonique, l'acide benzène-sulfonique, l'acide naphtalène-sulfonique-2 ou, mieux, l'acide p-toluène-sulfonique.

9. Procédé selon la revendication 1 dans lequel le catalyseur est un acide de Lewis ou un complexe d'acide de Lewis avec une base, de préférence avec une amine, un amide ou une phosphine.

10. Procédé selon la revendication 9 dans lequel l'acide de Lewis est un halogénure d'un élément appartenant à l'un des groupes II, III, IV et V de la classification périodique des éléments.

11. Procédé selon la revendication 9 dans lequel l'acide de Lewis est le trichlorure de fer, le tétrachlorure d'étain, le pentafluorure d'antimoine ou, plus particulièrement, le chlorure d'aluminium, le chlorure de zinc, le trichlorure de bore ou le trifluorure de bore.

12. Procédé selon la revendication 1 dans lequel le catalyseur est l'acide p-toluène-sulfonique, le benzène-sulfonate de pentyle, le p-toluène-sulfonate d'hydroxy-2 cyclohexyle, le phosphite de diphényle ou le complexe trichlorure de bore/éthylamine.

13. Procédé selon la revendication 1 dans lequel le catalyseur est le phosphite de diphényle.

14. Mélanges durcissables, stables au stockage, caractérisés en ce qu'ils contiennent:

a) un composé répondant à la formule I:

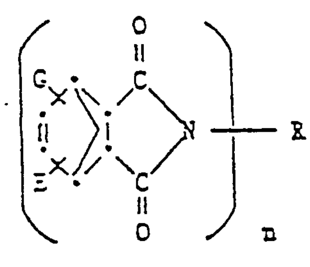 (I),

dans laquelle E représente un radical allyle ou méthallyle, G représente l'hydrogène ou un radical méthyle, n est égal à 1 ou à 2 et R représente, dans le cas où n est égal à 1, l'hydrogène, un alkyle en $C_1$-$C_{12}$, un alcényle en $C_3$-$C_6$, un cycloalkyle en $C_5$-$C_8$ un aryle en $C_6$-$C_{10}$ ou un benzyle, ou, dans le cas où n est égal à 2, un radical $-C_mH_{2m}-$ dont l'indice m désigne un nombre de 2 à 20, un radical arylène contenant de 6 à 10 atomes de carbone ou un radical répondant à la formule II:

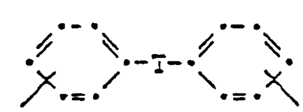 (II),

dans laquelle T représente un méthylène, un isopropylidène CO, O, S ou $SO_2$,

et

b) un ou plusieurs catalyseurs appropriés pour la polymérisation cationique.